# EUROPÄISCHE PATENTSCHRIFT

(11) **EP 0 941 654 B1**
(45) Veröffentlichungstag und Bekanntmachung des Hinweises auf die Patenterteilung: **23.04.2003**
(21) Anmeldenummer: 99102655.0
(22) Anmeldetag: 12.02.1999
(51) Int. Cl.: A01K 11/00

(54) **Vorrichtung zum Einbringen von Ohrmarken in Tierohren**
Ear tag applicator tool.
Outil pour appliquer des marques d'oreille

(30) Priorität: 17.02.1998 DE 19806381; 03.08.1998 DE 19835014
(43) Veröffentlichungstag der Anmeldung: 15.09.1999
(73) Patentinhaber: Lührs, Georg Dr.-Ing., 34128 Kassel (DE)
(72) Erfinder: Lührs, Friedrich, 49453 Rehden (DE); Lührs, Georg Dr.-Ing., 34128 Kassel (DE)
(74) Vertreter: Freiherr von Schorlemer, Reinfried, Dipl.-Phys.

(56) Entgegenhaltungen:
- WO-A-94/14316
- DE-A- 19 707 752
- DE-A- 19 726 467
- GB-A- 2 010 727
- NL-A- 8 402 597

## Beschreibung

Die Erfindung betrifft eine Vorrichtung der im Oberbegriff des Anspruchs 1 angegebenen Gattung.

Zur Kennzeichnung von Tieren, insbesondere Schweinen, werden Ohrmarken verwendet, die aus ersten und zweiten Teilen bestehen, die auch Vater- und Mutterohrmarkenteile genannt werden. Die Vaterohrmarkenteile weisen durch die Tierohren zur stoßende, mit Hinterschneidungen versehene Stifte, die Mutterohrmarkenteile dagegen die Stifte aufnehmende Ösen auf, die von den Hinterschneidungen hintergriffen und dadurch mit den Vaterohrmarkenteilen fest verbunden werden.

Das Einbringen der Ohrmarken in die Ohren der Tiere erfolgt in der Regel durch Zangen. Ein Beispiel einer solchen Zange ist in der Schrift DE 28 40 268 A1 gezeigt, bei der das Vaterohrmarkenteil durch einen Dorn geführt wird. Hierbei besteht der Vorgang des Einbringens der Marke in das Ohr im wesentlichen aus den folgenden Arbeitsschritten: Einführen der Ohrmarke in die Zange, Greifen des Tieres, dem eine Ohrmarke hinzugefügt werden soll, Zusammendrücken der Zange, um die Ohrmarke in das Ohr des Tieres einzupressen, und Öffnen der Zange, um die Ohrmarke aus der Zange auszubringen. Dabei wird während des gesamten Vorgangs eine Hand zum Bedienen der Zange benötigt, so daß zum Festhalten des Tieres immer nur eine Hand zur Verfügung steht. Ferner muß nach jedem Einbringen einer Ohrmarke die Zange mit einer neuen Marke befüllt werden, was einem flüssigen Arbeitsablauf entgegenwirkt. Eine gewisse Verbesserung stellt zwar die Vorrichtung nach DE 19 707 752 A1 dar, bei der eine Zange auf einem Ständer gehalten wird, was es gestattet, die Zange durch ein Fußpedal zu bedienen. Der Aufbau dieser Vorrichtung ermöglicht jedoch keinen flüssigen Arbeitsablauf, da auch hier nach jedem Einbringvorgang eine neue Ohrmarke in die Zange eingeführt werden muß.

Es ist daher bereits eine Vorrichtung der eingangs bezeichneten Gattung bekannt geworden (WO 94/14316), die ein Magazin zur Aufnahme von mehreren Vater- und Mutterohrmarkenteilen in Form einer auswechselbaren Patrone aufweist. Die Vater- und Mutterohrmarkenteile sind in je einer Führungsbahn geführt und mittels einer Feder in Richtung von Positionierungsmitteln in Form von Anschlägen vorgespannt, die im Bereich einer Einbringzone angeordnet sind. Der Aufbau der Vorrichtung ist vergleichsweise komplex und damit teuer und störanfällig. Außerdem können die Ohrmarken während der laufenden Benutzung der Vorrichtung nicht nachgefüllt werden, so daß nach dem Verbrauch der vorhandenen Ohrmarken ein Auswechseln der Patrone erforderlich ist. Ähnliches gilt für eine andere bekannte Vorrichtung dieser Art (GB 2 010 727 A1).

Entsprechende Vorrichtungen sind für Ohrmarken bekannt (EP 0 002 619 A2), bei denen die beiden Teile durch einen Verbindungssteg miteinander verbunden sind. Auch hier erfolgt der Transport der in einem Magazin befindlichen Ohrmarken zur Einbringzone mit Hilfe einer vorgespannten Feder.

Demgegenüber liegt der Erfindung die Aufgabe zugrunde, die Vorrichtung der eingangs bezeichneten Gattung so auszubilden, daß sie einen einfachen, betriebssicheren und preisgünstigen Aufbau hat, die für das Eingeben der Ohrmarken in die Magazine erforderliche Zeit verkürzt und die Tätigkeit des Einbringens der Ohrmarken in die Tierohren vereinfacht.

Zur Lösung dieser Aufgabe dienen die kennzeichnenden Merkmale des Anspruchs 1.

Die Erfindung bringt den Vorteil mit sich, daß die Vater- und Mutterohrmarkenteile unter dem Einfluß der Schwerkraft in ihre Einbringposition transportiert werden. Dadurch ergibt sich ein einfacher Aufbau, der weder zusätzliche Mittel in Form von Federn zum Transport der Teile in die Einbringposition noch auswechselbare Magazine erfordert. Aufgrund ihres Transports allein durch die Schwerkraft können die Ohrmarkenteile während der Benutzung der Vorrichtung laufend nachgefüllt werden, so daß sich keine Stillstandzeiten durch das Auswechseln von Magazinen oder ein sonstiges Nachfüllen der Ohrmarkenteile ergeben.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Vertikalschnitt durch eine erste Ausführungsform der erfindungsgemäßen Vorrichtung;
Fig. 2 eine vergrößerte Ansicht des eine Einbringzone enthaltenden Ausschnitts der Vorrichtung nach Fig. 1;
Fig. 3 die Vorderansicht eines oberen Teils eines Magazins für Mutterohrmarkenteile der Vorrichtung nach Fig. 1;
Fig. 4 die Draufsicht auf das Magazin nach Fig. 3;
Fig. 5 die Vorderansicht eines Mutterohrmarkenteils;
Fig. 6 einen Längsschnitt durch das Mutterohrmarkenteil nach Fig. 5;
Fig. 7 und 8 den Fig. 3 und 4 entsprechende Ansichten eines Magazins für Vaterohrmarkenteile der Vorrichtung nach Fig. 1;
Fig. 9 und 10 den Fig. 5 und 6 entsprechende Ansichten eines Vaterohrmarkenteils;
Fig. 11 in einer der Fig. 9 entsprechenden Vorderansicht ein Positionierungsmittel für das Vaterohrmarkenteil;
Fig. 12, 13 und 14 Teilansichten der Magazine und Positionierungsmittel in Richtung von Pfeilen X, Z bzw. Y in Fig. 2, wobei die Magazine in Fig. 12 und 14 im Gegensatz zu Fig. 2 mit Vater- bzw. Mutterohrmarkenteilen gefüllt sind;
Fig. 15 und 16 schematische, der Fig. 2 entsprechende Schnitte der Vorrichtung nach Fig. 1 in unterschiedlichen Betriebszuständen bei der Anwendung;
Fig. 17 eine der Fig. 11 entsprechende Ansicht eines alternativen Positionierungsmittels bei Anwendung anderer Vaterohrmarkenteile;
Fig. 18 eine der Fig. 13 entsprechende Ansicht einer alternativen Ausführungsform für die Positionierung von Mutterohrmarkenteilen;
Fig. 19 einen Längsschnitt durch das Positionierungsmittel nach Fig. 18; und
Fig. 20 die Vorderansicht einer zweiten Ausführungsform eines Magazins für Vaterohrmarkenteile.

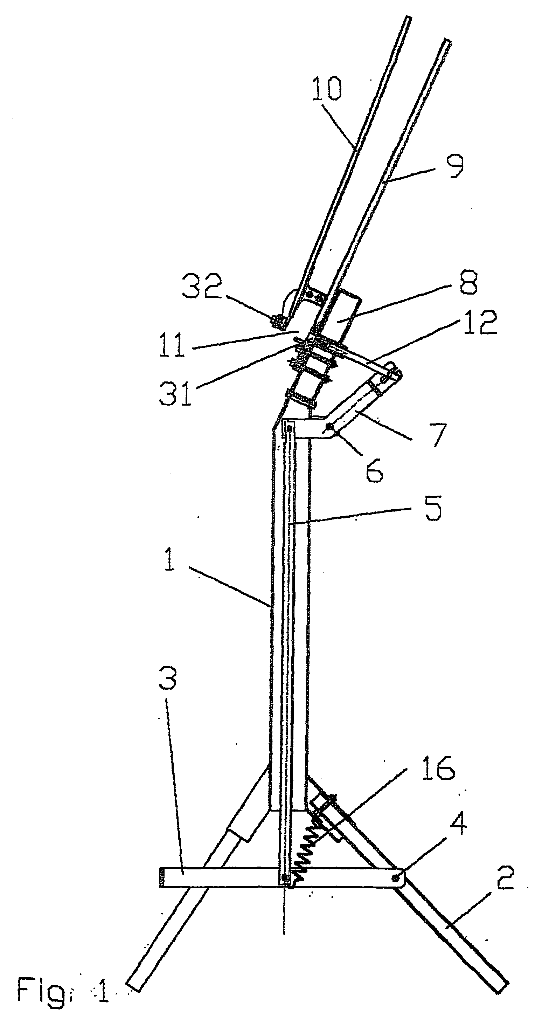

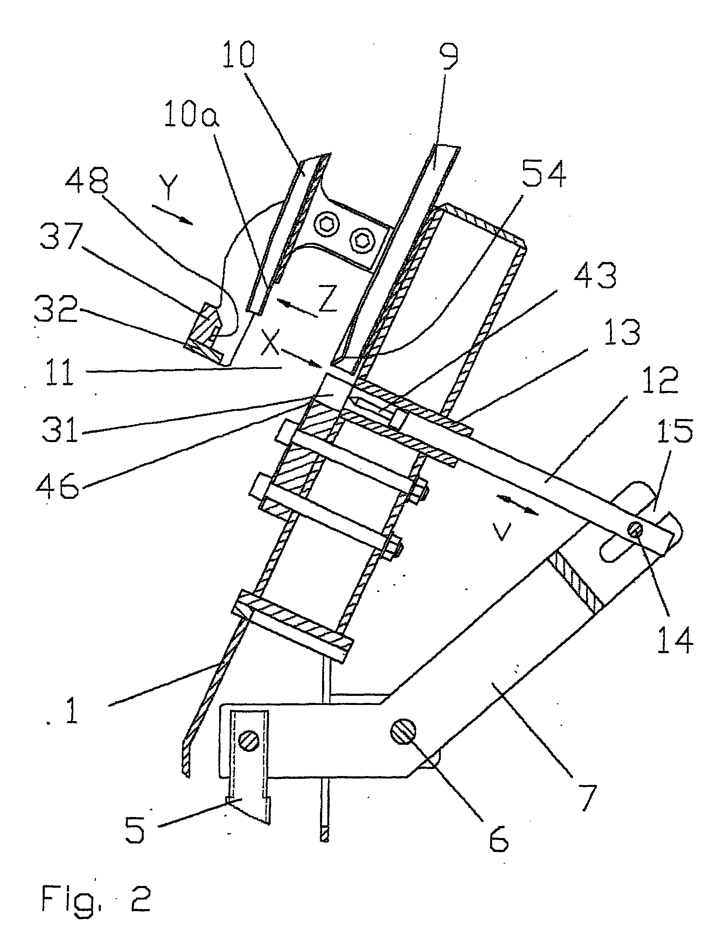

Die derzeit für am besten gehaltene Ausführungsform der erfindungsgemäßen Vorrichtung zum Einbringen von Ohrmarken in Tierohren ist in Fig. 1 bis 16 dargestellt. Wie zunächst Fig. 1 und 2 zeigen, weist sie ein Gestell 1 mit einem Fußteil 2 auf, in dem ein Fußhebel 3 bei 4 schwenkbar gelagert ist. In einem mittleren Teil des Fußhebels 3 ist das untere Ende einer Zug- bzw. Druckstange 5 angelenkt, deren oberes Ende an einem im Gestell 1 bei 6 gelagerten Hebel 7 gelenkig befestigt ist. Das Gestell 1 ist am oberen Ende mit einer Halterung 8 versehen, an der zwei Magazine 9 und 10 starr befestigt sind, deren untere Enden mit Abstand voneinander und beidseitig einer Einbringzone 11 angeordnet sind. Die Magazine 9, 10 nehmen, wenn die Vorrichtung auf einem horizontalen Erdboden abgestellt wird, entsprechend Fig. 1 eine schräg zur vertikalen geneigte Lage ein. Wie insbesondere Fig. 2 zeigt, ist im Bereich der Einbringzone 11 ein quer zu dieser und in Richtung eines Doppelpfeils v hin- und herbewegbarer, vorzugsweise gerader Stempel 12 vorgesehen, der in einer vorzugsweise als Geradführung ausgebildeten Führung 13 gelagert ist. Das Hinterende des Stempels 12 liegt in gabelförmigen Endabschnitten des Hebels 7 und ist mittels eines Querstifts 14, der randoffene Schlitze 15 dieser Endabschnitte durchragt, gelenkig und antriebsmäßig mit dem Hebel 7 verbunden. Dabei ist die Anordnung so, daß der Stempel 12 mittels des Fußhebels 3 gegen die Kraft einer Feder 16 (Fig. 1) in Richtung der Einbringzone 11 bewegt bzw. bei Freigabe des Fußhebels 3 durch die Feder 16 in die aus Fig. 1 und 2 ersichtliche Stellung zurückgezogen wird.

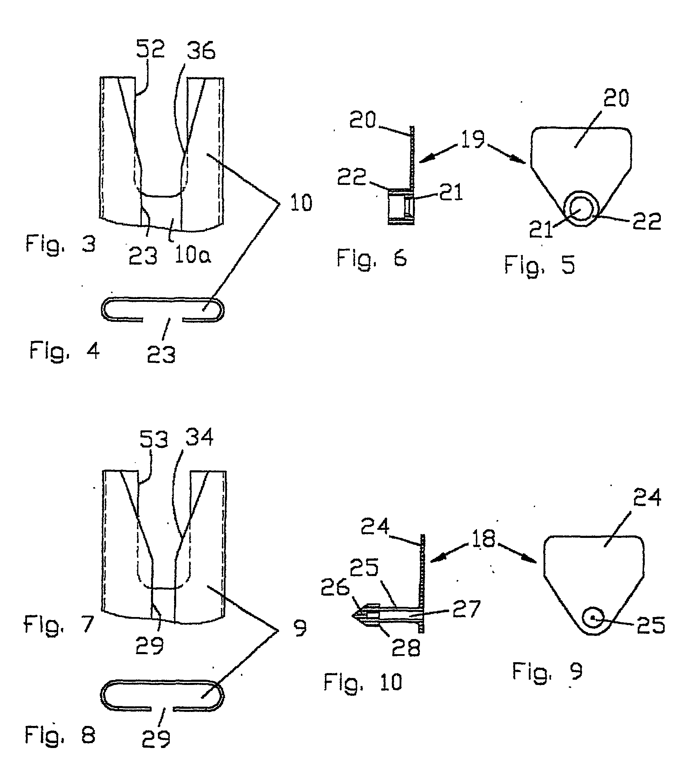

Nach Fig. 3 bis 9 sind die Magazine 9 und 10 zwecks Aufnahme der beiden Teile 18,19 von üblichen Ohrmarken als Führungbahnen mit C-förmigen Querschnitten ausgebildet. Dabei wird davon ausgegangen, daß bei üblichen Ohrmarken das ersten Teil 18 ein sogenanntes Vaterohrmarkenteil und das zweite Teil 19 ein sogenanntes Mutterohrmarkenteil ist. Das zweite Teil 19 besteht nach Fig. 5 und 6 aus einer flachen Scheibe 20 mit einer Öse 21, die von einem zylindrischen Schutzkragen 22 umgeben ist. Dementsprechend ist die C-Form des Magazins 10 nach Fig. 3 und 4 derart ausgebildet, daß sie einen Führungsschlitz 23 begrenzt, der den Schutzkragen 22 aufnehmen kann, wenn die Scheibe 20 in den seitlich vom Führungsschlitz 23 befindlichen Abschnitten und im wesentlichen parallel zur Rückseite des C-Profils geführt ist. Dagegen besteht das erste Teil 18 der Ohrmarke nach Fig. 9 und 10 aus einer flachen Scheibe 24 mit einem senkrecht von dieser abstehenden Stift 25, der am freien Ende mit einer Spitze 26 und im hinteren Bereich mit einem z.B. zylindrischen Sackloch 27 versehen ist. Außerdem bildet die Spitze 26 eine Hinterschneidung 28, die nach dem Eintreiben in die Öse 21 des zweiten Teils 19 hinter diese greift und dadurch beide Teile 18,19 axial fest und durch Formschluß miteinander verbindet. Das C-Profil des Magazins 9 ist dabei so ausgebildet, daß es einen Führungsschlitz 29 aufweist, der den Stift 25 aufnehmen kann, wenn die Scheibe 24 in den seitlich davon befindlichen Abschnitten und im wesentlichen parallel zur Rückseite des C-Profils im Magazin 9 geführt wird.

Nach Fig. 2 ist beidseits der Einbringzone 11 und unterhalb der Magazine 9 bzw. 10 je ein Positionierungsmittel 31 bzw. 32 angeordnet, das zur Anordnung der ersten bzw. zweiten Teile 18,19 in je einer für den Ohrmarkeneinzug zweckmäßigen Einbringposition dient.

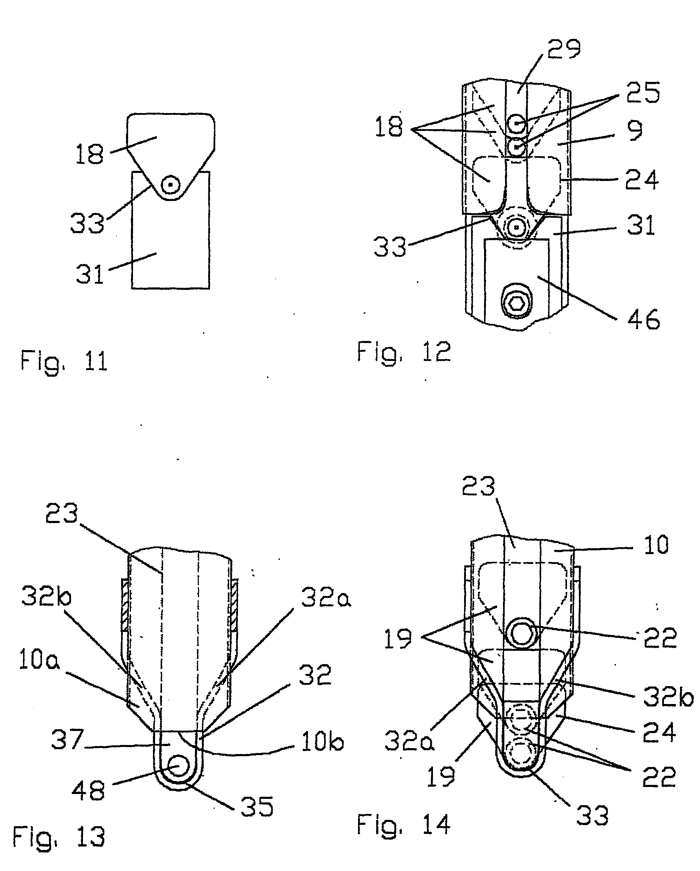

Das Postionierungsmittel 31 ist im wesentlichen eine dicht unterhalb des Magazins 9 angeordnete Platte, deren oberer Rand als eine Auffangschale ausgebildet ist, die eine aus Fig. 11 und 12 ersichtliche Kontur 33 besitzt, die zur exakten Positionierung der ersten Teile 18 in der Einbringposition zweckmäßig als Negativabdruck der unteren Abschnitte der Teile 18 ausgebildet ist. Das Positionierungsmittel 31 ist außerdem zweckmäßig mit einem solchen Abstand unterhalb des nach unten offenen Endes des Magazins 9 angeordnet, das ein in diesem befindliches erstes Teil 18 der Ohrmarke, wenn es mit seinem unteren Abschnitt auf der Kontur 33 des Positionierungsmittels 31 aufliegt, noch teilweise im Magazin 9 angeordnet ist und daher nicht nach vorn aus diesem herausfallen kann. Daher wird ein Teil 18, wenn es von oben her längs eines Einführungstrichters (Fig. 7) in das Magazin 9 eingeführt wird, in diesem unter dem Einfluß der Schwerkraft nach unten rutschen, mit seiner Scheibe 24 auf das Positionierungmittel 31 fallen und dann automatisch eine für den Einbringvorgang gewünschte Position einnehmen.

Das Positionierungsmittel 32 hat eine ähnliche Funktion. Wie insbesondere Fig. 13 von der Seite der Einbringzone 11 her und Fig. 14 von der entgegengesetzten Seite her zeigen, ist das Positionierungsmittel 32 als eine unterhalb des Magazins 10 angeordnete Aurfangschale ausgebildet, die zur exakten Positionierung der zweiten Teile 19 im unteren Bereich eine Kontur 35 besitzt, die als Negativabdruck von ausgewählten Abschnitten der Teile 19, hier der unteren Hälften der Schutzkragen 22 ausgebildet ist. An die Kontur 35 schließen sich nach oben keilförmig auseinanderlaufende Wandteile 32a,32b an, die eine Führung für die Schutzkragen 22 beim Herabfallen der Teile 19 auf das Positionierungsmittel 32 dienen. Das Positionierungsmittel 32 ist zweckmäßig mit einem solchen Abstand unterhalb des nach unten offenen Endes des Magazins 10 angeordnet, das ein in diesem befindliches zweites Teil 19 der Ohrmarke, wenn aus auf der Kontur 35 aufliegt, noch teilweise im Magazin 10 angeordnet ist und daher nicht aus dem Positionierungsmittel 32 herausfallen kann. Daher wird ein Teil 19, wenn es von oben her längs eines Einführungstrichters 36 (Fig. 3) in das Magazin 10 eingeführt wird, in diesem unter der Wirkung der Schwerkraft nach unten rutschen, mit seinem Schutzkragen 22 auf das Positionierungsmittel 32 fallen und dann automatisch eine für den Einbringvorgang gewünschte Stellung einnehmen. Dabei ist, wie Fig. 2 zeigt, eine Rückseite 10a des Magazins 10 der den Führungsschlitz 29 aufweisenden Vorderseite des Magazins 9 zugewandt. Der Führungsschlitz 23 des Magazins 10 liegt somit auf der von der Einbringzone 11 abgewandten Seite, und das Positionierungsmittel 32 liegt außerdem räumlich so weit vor dem Führungsschlitz 23, daß die mit den Schutzkragen 22 auf ihm aufliegenden Teile 19 durch einen zwischen der Rückseite 10a des Magazins 10 und dem Positionierungsmittel 32 gebildeten Spalt nach unten herausgezogen werden können.

Das Positionierungsmittel 32 für die zweiten Teile 19 ist an seiner Rückseite mit einem Anschlag 37 (Fig. 2) versehen, mit dem sich die Vorderenden der Schutzkragen 22 der zweiten Teile 19 in Anlage befinden, wenn diese auf dem Positionierungsmittel 32 aufliegen. Dadurch wird eine Entnahme oder ein Herausfallen der Teile 19 in Richtung des Pfeils Z in Fig. 2 verhindert.

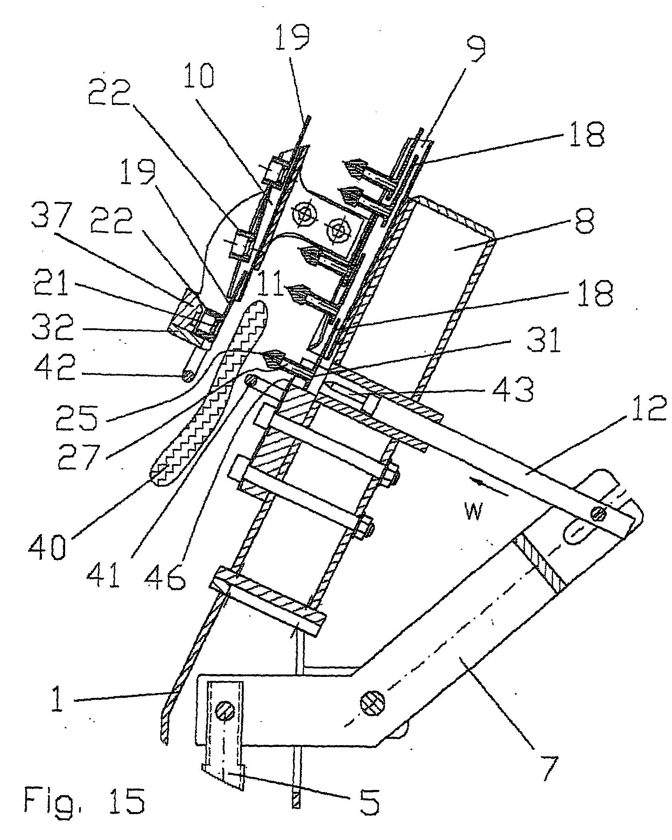

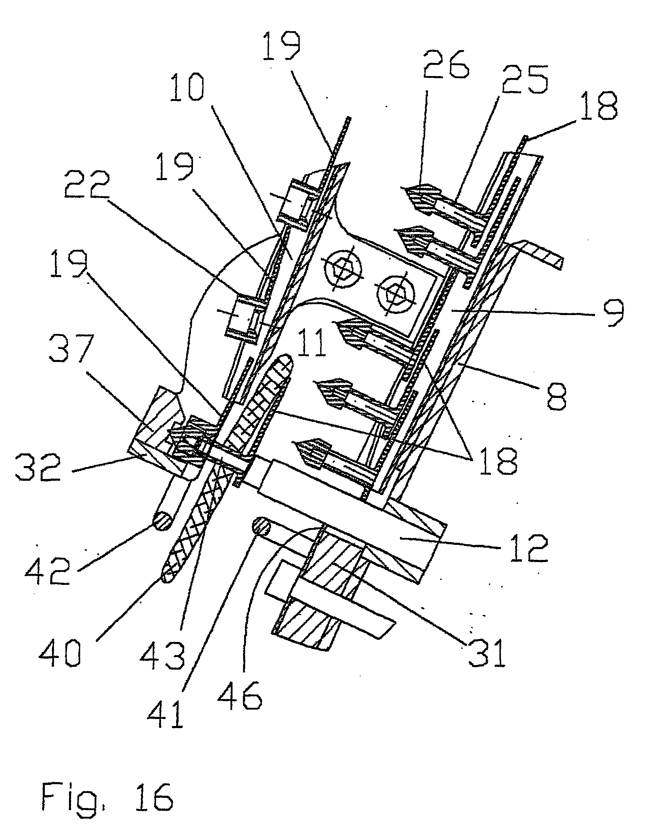

Die Funktionsweise der beschriebenen Vorrichtung ist, wie insbesondere Fig. 15 und 16 zeigen, im wesentlichen wie folgt:

Es werden zunächst die Magazine 9 und 10 von den oberen Einführungstrichtern 34,36 her mit den Ohrmarkenteilen 19 bzw. 18 gefüllt. Die Breite der Führungsschlitze 23,29 ist so gewählt, daß die Schutzkragen 22 bzw. Stifte 25 sicher durchgleiten, aber auch geführt werden. Dabei spielt die genaue Lage der Teile 18 bzw. 19 zueinander keine Rolle. Aufgrund der gewählten Ausbildung und Anordnung der Magazine 9,10 und der Positionierungsmittel 31,32 können die Teile 18,19 vielmehr so in den Magazinen 9,10 herabrutschen und dabei so übereinander gestapelt werden, daß sich entweder die Unterkanten der Schutzkragen 22 bzw. Stifte 25 irgendeines Teils 18,19 auf die Oberkanten der Scheiben 20,24 der darunter befindlichen Teile 18,19 oder umgekehrt die Unterkanten der Scheiben 20,24 irgendeines Teils 18,19 auf die Oberkanten der Schutzkragen 22 bzw. Stifte 25 der darunter befindlichen Teile 18,19 auflegen, wie in Fig. 12 und 14 angedeutet ist. Außerdem ist die Tiefe der von den C-Profilen gebildeten Führungsbahnen so gewählt, daß die in die Magazine 9,10 gegebenen Teile 18,19 unter der Wirkung der Schwerkraft nur übereinander, aber nicht hinter- bzw. nebeneinander nach unten rutschen können und jeweils nur das unterste Teil 18,19 des Stapels auf dem zugehörigen Positionierungsmittel 31,32 aufliegt, dadurch in dem Bereich des Stempels 12 gelangt und von diesem erfaßt werden kann.

Nach dem Befüllen der Magazine 9,10 kann ein in Fig. 14 und 15 schematisch angedeutetes Tierohr 40 in der Einbringzone 11 angeordnet werden. Anschließend wird der Fußhebel 3 betätigt, wodurch der Stempel 12 vorgeschoben und dadurch von hinten gegen das auf dem Positionierungsmittel 31 liegende erste Teil 18 gedrückt wird. Dadurch wird das Teil 18 vom Positionierungsmittel 31 bzw. der Auffangschale herausgedrückt und in Richtung eines Pfeils w (Fig. 15) durch die Einbringzone 11 hindurch gegen das im zugehörigen Positionierungsmittel 32 gehaltene zweite Teil 19 vorgeschoben (Fig. 16), wobei der Stift 25 zunächst das Tierohr 40 durchsticht und dann in die Öse 21 des Teils 19 eintritt. Da dieses durch den Anschlag 37 an einer Verschiebung in Richtung des Pfeils w gehindert ist, durchdringt der Stift 25 die Öse 21 vollständig, bis die Hinterschneidung 28 (Fig. 10) die gewünschte formschlüssige Verbindung herstellt. Danach wird der Fußhebel 3 losgelassen, worauf der Stempel 12 durch die Feder 16 in die Stellung nach Fig. 15 zurückgezogen wird. Das Tierohr 40 kann jetzt aus der Einbringzone 11 entfernt werden, wobei gleichzeitig das noch auf dem Positionierungsmittel 32 befindliche zweite Teil 19 nach hinten, d.h. entgegengesetzt zum Pfeil w von diesem abgezogen wird. Sobald dieser Zustand erreicht und auch der Stempel 12 hinter das Positionierungsmittel 31 zurückgezogen ist, rutschen unter dem Einfluß der Schwerkraft die nächsten Teile 18, 19 der Magazinstapel bis zur Auflage auf den Positionierungsmitteln 31,32 nach, so daß das nächste Tierohr 40 in der beschriebenen Weise mit einer Ohrmarke versehen werden kann. Gleichzeitig können während der laufenden Arbeiten neue Ohrmarkenteile 18, 19 in die Magazine 9,10 eingefüllt werden, so daß diese stets zumindest teilweise gefüllt bleiben.

Um zu vermeiden, daß die untersten Teile 18,19 der Stapel beim Einführen der Tierohren 40 in die Einbringzone 11 ungewollt aus den Positionierungsmitteln 31,32 herausgedrückt oder in diesen verkantet werden, sind den Positionierungsmitteln 31,32 vorzugsweise Sicherungselemente 41 und/oder 42 (Fig. 15, 16) zugeordnet, die z.B. als U-förmige Schutzbügel ausgebildet sind. Diese Sicherungselemente 41,42 sind so angeordnet, daß sie die Teile 18,19 beim Annähern der Tierohren 40 von unten her abdecken.

Wie insbesondere Fig. 10 zeigt, weisen die Stifte 20 der ersten Teile 18 jeweils ein zur Rückseite hin offenes Sackloch 27 auf. Daher ist an der Vorderseite des Stempels 12 zweckmäßig ein senkrecht von seiner vorderen Stirnfläche abstehender Dorn 43 angebracht, dessen Form und Größe so gewählt ist, daß er in das Sackloch 27 paßt. Außerdem ist die Anordnung so getroffen, daß das Sackloch 27, wenn ein erstes Teil 18 auf dem Positionierungsmittel 31 aufliegt, im wesentlichen koaxial zum Dorn 43 ausgerichtet ist.

Wird daher der Stempel 12 vorgeschoben, dringt der Dorn 43 in das Sackloch 27 ein (Fig. 16), wodurch ein geradliniger Vorschub des Teils 18 und ein sicheres Einführen des Stifts 25 in die Öse 21 des zweiten Teils 19 gewährleistet ist. Das gilt selbst dann, wenn ein erstes, auf dem Positionierungsmittel 31 befindliches Teil 18 relativ zum Stempel 12 etwas schief stehen sollte.

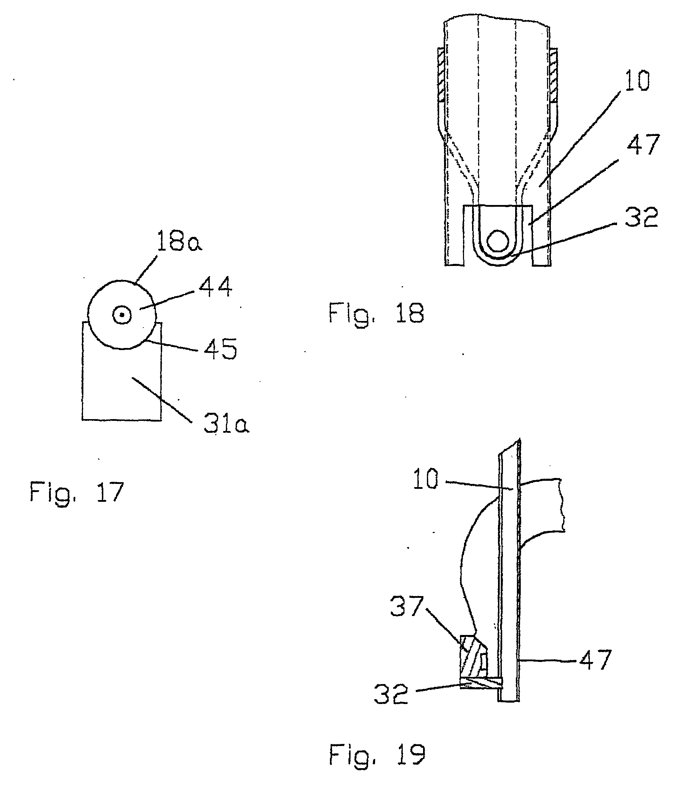

Werden anstelle der beschriebenen, im unteren Bereich im wesentlichen dreieckförmigen Ohrmarken (Fig. 5,6,9,10) andere bekannte Ohrmarken, z.B. solche mit kreisrunden Scheiben 44 (Fig. 17) angewendet, ist die beschriebene Funktionsweise im wesentlichen identisch. Zur exakten Positionierung kann dann vorgesehen sein, den zugeordneten Positionierungsmitteln entsprechend angepaßte, kreisrunde Konturen 45 zu geben, wie in Fig. 17 für ein erstes Teil 18a und ein Positionierungsmittel 31a angedeutet ist. Außerdem kann vorgesehen sein, die Magazine 9,10 bzw. die von ihnen gebildeten Führungsbahnen und ggf. den Dorn 43 entsprechend anzupassen. Mit besonderem Vorteil werden diese Teile außerdem passend für einige oder alle gängigen Ohrmarken auf Lager gehalten und leicht auswechselbar in der Vorrichtung montiert, z.B. mit Hilfe von leicht zugänglichen Befestigungsschrauben, so daß sie in Abhänigkeit von der im Einzelfall vorhandenen Ohrmarkenform bzw. -größe leicht ausgetauscht werden können.

Die ersten und zweiten Teile 18,19 bestehen normalerweise aus Kunststoff, wobei zumindest die Scheiben 20,24 (Fig. 5,9) flexibel sind. Daher können sie sich beim beschriebenen Einbringvorgang ausreichend verformen, was ihr Herausdrücken bzw. Herausziehen aus den zugehörigen Magazinen 9,10 bzw. Positionierungsmitteln 31,32 während des Einbringvorgangs oder danach erleichtert.

Zur Verbesserung der Positionierung der ersten Teile 18 ist gemäß Fig. 2, 15 und 16 vorzugsweise ein zusätzlicher Gegenhalter 46 vorgesehen. Dieser ist z.B. als flache Scheibe ausgebildet und so an der Vorderseite des Positionierungsmittels 31 angebracht, daß er die von diesem gebildete Auffangschale nach vorn zumindest teilweise abdeckt (Fig. 12) und dadurch ein ungewolltes Herausfallen der ersten Teile 18 verhindert. Der Gegenhalter 46 kann bei Bedarf flexibel ausgebildet oder zumindest in Richtung der Einbringzone 11 (Pfeil w in Fig. 15) federnd am Positionierungsmittel 31 befestigt sein, insbesondere wenn die ersten Teile 18 aus vergleichsweise starren, unflexiblen Materialien bestehen. Daher können derartige erste Teile 18 auch beim Vorhandensein des Gegenhalters 46 leicht vom Stempel 12 in die Einbringzone 11 befördert werden.

Im übrigen sind die Positionierungsmittel 31,32 bzw. die aus ihnen geformten Auffangschalen so ausgebildet und/oder angeordnet, daß auch dann, wenn die Teile 18,19 auf ihnen aufliegen und teils in ihnen und teils in den Magazinen 9,10 angeordnet sind, ein zur Einbringzone 11 hin offener, das Ausstoßen bzw. Herausziehen der Teile 18,19 erleichternder Bereich entsteht, wie insbesondere Fig. 12, 14 und 15 zeigen. Im Hinblick auf die zweiten Teile 19 kann ein solcher Bereich entsprechend Fig. 18 und 19 vor allem dadurch geschaffen werden, daß das C-Profil des Magazins 10 am unteren Ende und an der Rückseite 10a mit einer Aussparung 47 versehen wird. Dadurch kann insbesondere bei Anwendung von runden Ohrmarken (Fig. 17) erreicht werden, daß sich die zweiten Teile 19 nach dem Anbringen am Tierohr 40 leicht aus der Einbringposition entfernen lassen. Alternativ kann die Rückseite 10a des Magazins 10 entsprechend einer Linie 10b (Fig. 13) in einer ausreichend großen Höhe über der Kontur 35 abgeschnitten sein.

Gemäß einer weiteren bevorzugten Ausführungsform ist der Querschnitt des Dorns 43 (Fig. 15, 16) des Stempels 12 zumindest teilweise etwas größer, als dem Sackloch 27 (Fig. 10) entspricht. Dadurch wird der Dorn 43 beim Einbringvorgang durch Klemmung mit dem ersten Teil 18 verbunden. Das hat zur Folge, daß der Stempel 12, wenn er durch die Feder 16 (Fig. 1) zurückgezogen wird, das erste Teil 18 mitnimmt, wodurch das zweite Teil 19 selbsttätig aus dem Positionierungsmittel 32 herausgezogen und in die Einbringzone 11 gebracht wird, so daß ein weitgehend schmerzfreies Entfernen des Tierohrs 40 aus der Einbringzone 11 möglich ist. Beim Anschlag des ersten Teils 18 an die Vorderseite des Magazins 9 und den Gegenhalter 46 wird der Dorn 43 dann automatisch wieder aus dem ersten Teil 18 herausgezogen.

Um spätere Verletzungen des mit der Ohrmarke versehenen Tiers dadurch zu vermeiden, daß die Spitze 26 (Fig. 10) ungewollt in die Tierhaut eindringt, ist der vorzugsweise aus Stahl bestehende Anschlag 37, wie Fig. 2 und 13 zeigen, zweckmäßig mit einem der Einbringzone 11 zugewandten Sackloch 48 versehen. Dieses ist so angebracht, daß die Spitzen 26, wenn die Teile 18 durch den Stempel 12 vorgeschoben werden, in das Sackloch 48 eindringen und an dessen Boden plattgedrückt bzw. abgeflacht werden.

Bei der Ausführungsform nach Fig. 1 bis 19 kommen die Vaterohrmarkenteile 18 auf der in Fig. 15 und 16 rechten, die Mutterohrmarkenteile 19 dagegen auf der in Fig. 15 und 16 linken Seite des schematisch angedeuteten Tierohrs 40 zu liegen. Ist es erwünscht, diese relative Lage zu ändern, ohne das Tierohr 40 anders als dargestellt in die Einbringzone 11 einführen zu müssen, können die Lagen der Magazine 9 und 10 und der zugehörigen Teile im Vergleich zu Fig. 1 bis 19 entsprechend vertauscht werden.

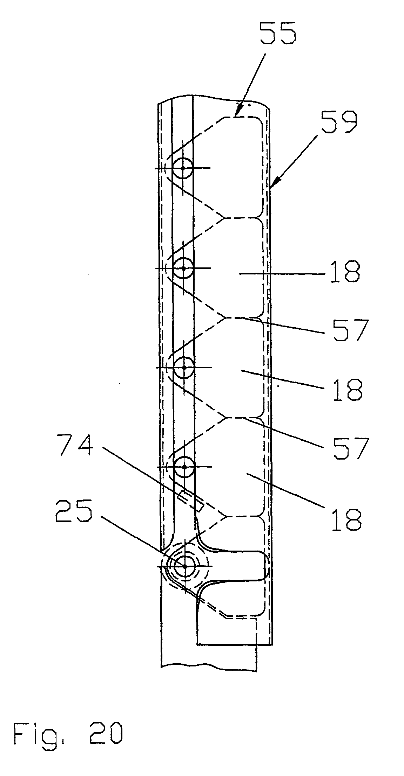

Bei den bisher beschriebenen Auführungsformen werden die Vater- und Mutterohrmarkenteile 18, 19 einzeln und unabhängig voneinander in die Magazine 9, 10 eingeführt. Daneben sind aber auch zusammenhängende Vaterohrmarkenteile 18 (Fig. 20) und entsprechend zusammenhängende Mutterohrmarkenteile bekannt, die jeweils einen Streifen 55 aus z.B. fünf hintereinander liegenden Teilen 18 bilden, die an ihren Seitenkanten durch dünne und als Sollbruch- bzw. Reißlinien 57 ausgebildete Kunststoffstege miteinander verbunden sind. Bei Anwendung solcher zusammenhängender Teile 18 ist vorzugsweise wenigstens eines der Magazine, z.B. 59, derart schwenkbar gelagert oder derart mit einem schwenkbaren Haltestift 74 versehen, daß beim Ausstoßvorgang einerseits ein unerwünschtes Nachrutschen der ersten oder zweiten Teile 18 vermieden und gleichzeitig eine sichere Trennung längs der Sollbruchlinien 57 erreicht wird.

Die Erfindung ist nicht auf die beschriebenen Ausführungsbeispiele beschränkt, die auf vielfache Weise abgewandelt werden können. Das gilt insbesondere für die Form und die Materialien der verwendeten Ohrmarken und die zur Anpassung an diese vorgesehenen Querschnittsprofile der Magazine und Positionierungsmittel, die z.B. auch keilförmig ausgebildet sein könnten. Insbesondere ist es möglich, die Vaterohrmarkenteile sowie die Mutterohrmarkenteile durch einen Kunststoff- oder Papierstreifen (z.B. Klebestreifen) zu verbinden. Durch eine solche Verbindung lassen sich die Ohrmarkenteile in einem Paket in das jeweilige Magazin 9,9c bzw. 10,10c einbringen. In diesem Zusammenhang ist es vorteilhaft, die C-Profile z.B. an der Rückseite mit je einem weiteren Längsschlitz 52 bzw. 53 (Fig. 3,7) zu versehen, der ein Ablösen des Kunststoff- oder Papierstreifens im jeweiligen Magazin vereinfacht. Weiter können zumindest die oberen Bereiche der Magazine bzw. der C-förmigen Profile die ersten und zweiten Teile mit ausreichend viel Spiel aufnehmen, um einen leichten, selbsttätigen Transport unter dem Einfluß der Schwerkraft sicherzustellen. Aus demselben Grund könnten die Stapel der Teile 18,19 in den Magazinen zusätzlich mit einem Gewicht beschwert werden. Auch in diesem Fall erfolgt das Nachrutschen der Teile allein unter dem Einfluß der Schwerkraft. Im Bereich der Positionierungsmittel könnten die Querschnitte der Magazine reduziert werden, wie insbesondere Fig. 2 zeigt, um eine optimale Positionierung zu erhalten. Außerdem könnten die Magazine 9 im vorderen Bereich mit in Richtung der Einbringzone 11 gerichteten Umbiegungen versehen werden, die das Ausstoßen der Teile 18 weiter erleichtert. Dies ist z.B. in Fig. 2 durch das Bezugszeichen 54 angedeutet. Außerdem könnte vorgesehen sein, den Antrieb über den Fußhebel 3 so auszuführen, daß nach dem Zusammenführen der Ohrmarkenteile 18 und 19 der Dorn 43 bzw. der Stempel 12 auch ohne Zurücknahme des Fußes vom Fußhebel 3 automatisch zurückgeführt wird. Durch diese Maßnahme kann auf einfache Weise sichergestellt werden, daß der Fußhebel 3 jeweils mit Sicherheit so weit vorgeschoben wird, wie es für die Verbindung der beiden Teile 18,19 erforderlich ist. Alternativ kann an der Halterung 8 ein Anschlag angebracht werden, der eine Begrenzung der Bewegung des Stempels 12 bewirkt und dadurch die vollzogene Verbindung der Teile 18,19 anzeigt. Weiterhin wäre es möglich, anstelle der im wesentlichen geraden Magazine 9,10 leicht gekrümmte Magazine vorzusehen und/oder die aus Fig. 1 ersichtliche Neigung der Magazine zur Vertikalen zu ändern, sofern die Krümmungen so gering bzw. die Magazine so steil angeordnet sind, daß die Teile 18,19 allein aufgrund der Schwerkraft nachrutschen können. Auch die Anwendung vertikal stehender Magazine ist möglich.

Weiter wäre es möglich, den Fußhebel 3 durch einen Taster zu ersetzen und die Bewegung des Stempels 12 durch einen elektrisch oder pneumatisch betriebenen Antrieb vorzunehmen. In diesem Fall wäre es weiter möglich, die gesamte Vorrichtung mit einem Seil oder einer Kette an einer Wand, Decke oder dgl. zu befestigen und im Augenblick des Ohrmarkeneinzugs an das Ohr des Tieres heranzubewegen. Hierdurch könnte die Vorrichtung leicht in unterschiedlichen Höhen angeordnet und alternativ auch zur Kennzeichnung anderer Tiere, insbesondere z.B. von Schafen und anderen Huftieren, benutzt werden. Bei dieser Anwendungsweise empfiehlt es sich, die oberen Enden der Magazine mit lösbaren Deckeln oder dgl. zu verschließen, damit die Ohrmarkenteile 18, 19 beim Bewegen der Vorrichtung nicht unbeabsichtigt aus den Magazinen herausfallen können. Besonders vorteilhaft ist es schließlich, am Gestell 1 oder der Halterung 8 zusätzlich wenigstens ein weiteres Gerät, insbesondere ein Kastrationsgerät und/oder einen Impfbesteckhalter zu befestigen, um die Vorrichtung dadurch auch für andere Anwendungszwecke geeignet zu machen. Schließlich versteht sich, daß die verschiedenen Merkmale auch in anderen als den dargestellten und beschriebenen Kombinationen verwendet werden können.

## Patentansprüche

1. Vorrichtung zum Einbringen von Ohrmarken in Tierohren (40), wobei die Ohrmarken ein erstes, mit einem Stift (25) versehenes Teil (18,18a) und ein zweites, mit einer Öse (21) versehenes Teil (19) aufweisen, enthaltend: eine Einbringzone (11), beidseits der Einbringzone (11) mit Abstand angeordnete Positionierungsmittel (31,31a,32) zur Anordnung der ersten und zweiten Teile (18,18a,19) in Einbringpositionen, zwei zur Aufnahme einer Anzahl von ersten bzw. zweiten Teilen (18,18a,19) bestimmte, als Führungsbahnen ausgebildete Magazine (9,10,59), mittels derer die ersten und zweiten Teile (18,18a,19) unter der Wirkung einer Kraft nacheinander den Positionierungsmitteln (31,31a,32) zuführbar sind, einen dem Positionierungsmittel (32) für die zweiten Teile (19) zugeordneten Anschlag (37) und einen hin- und herschiebbaren Stempel (12), mittels dessen eines der in der Einbringposition befindlichen Teile (18,18a) so aus dieser ausstoßbar und quer durch die Einbringzone (11) in Richtung des anderen Teils (19) bewegbar ist, daß der Stift (25) und die Öse (21) miteinander in Eingriff gelangen und die beiden Teile (18,18a,19) miteinander verbinden, **dadurch gekennzeichnet, daß** die Magazine (9,10,59) so angeordnet und ausgebildet sind, daß die ersten und zweiten Teile (18,18a,19) den Positionierungsmitteln (31,31a,32) aufgrund der Wirkung der Schwerkraft zuführbar sind.

2. Vorrichtung nach Anspruch 1, **dadurch gekennzeichnet, daß** die Positionierungsmittel (31,31a,32) als Auffangschalen ausgebildet sind und die Magazine (9,10,59) so ausgebildet und den Auffangschalen zugeordnet sind, daß jeweils nur ein erstes bzw. zweites Teil (18,18a,19) die Einbringposition einnehmen kann.

3. Vorrichtung nach Anspruch 2, **dadurch gekennzeichnet, daß** die Auffangschalen zur exakten Positionierung der ersten und/oder zweiten Teile (18,18a,19) in der Einbringposition als Negativabdrücke von ausgewählten Abschnitten der ersten bzw. zweiten Teile (18,18a,19) ausgebildet sind.

4. Vorrichtung nach einem der Ansprüche 1 bis 3, **dadurch gekennzeichnet, daß** das Magazin (9,9a,59;10,10a) für die ersten und/oder zweiten Teile (18,18a;19) als C-Profil ausgebildet und mit einem die Stifte (25) aufnehmenden Führungsschlitz (29) versehen ist.

5. Vorrichtung nach einem der Ansprüche 2 bis 4, **dadurch gekennzeichnet, daß** die Positionierungsmittel (31,31a,32) und die ersten und/oder zweiten Teile (18,18a,19) so positioniert sind, daß diese in den Einbringpositionen teils in der zugehörigen Auffangschale teils im zugehörigen Magazin (9,10,59) angeordnet sind und ein zur Einbringzone (11) hin offener, das Ausstoßen bzw. Herausziehen der ersten und/oder zweiten Teile (18,18a,19) aus der Einbringposition erleichternder Bereich gebildet ist.

6. Vorrichtung nach einem der Ansprüche 1 bis 5, **dadurch gekennzeichnet, daß** dem Positionierungsmittel (31,31a) für die ersten Teile (18,18a) ein zur verbesserten Positionierung in der Einbringposition bestimmter Gegenhalter (46) zugeordnet ist.

7. Vorrichtung nach einem der Ansprüche 1 bis 6, **dadurch gekennzeichnet, daß** der Stempel (12) an seinem Vorderende einen in Sacklöcher (27) der ersten Teile (18,18a) einführbaren Dorn (43) aufweist und der Dorn (43) zumindest teilweise einen etwas größeren Außenquerschnitt besitzt, als den Innenquerschnitten der Sacklöcher (27) entspricht.

8. Vorrichtung nach einem der Ansprüche 1 bis 7, **dadurch gekennzeichnet, daß** der Stempel (12) gerade ausgebildet, in einer Geradführung hin- und herschiebbar gelagert und mittels eines Fußhebels (3) gegen die Kraft einer Feder (16) betätigbar ist.

9. Vorrichtung nach einem der Ansprüche 1 bis 8 zum Einbringen von zusammenhängenden, durch dünne Stege verbundenen ersten und zweiten Teilen (18, 19), **dadurch gekennzeichnet, daß** wenigstens einem der beiden Magazine (59) ein Haltestift (74) zugeordnet ist, der in einer Arbeitsstellung das Nachrutschen der zugehörigen ersten oder zweiten Teile (18, 19) zu ausgewählten Zeitpunkten während des Verbindungsvorgangs verhindert.

10. Vorrichtung nach Anspruch 9, **dadurch gekennzeichnet, daß** der Haltestift (74) durch Verschwenken des Magazins (59) in die Arbeitsstellung bringbar ist.

11. Vorrichtung nach einem der Ansprüche 1 bis 10, **dadurch gekennzeichnet, daß** es ein Gestell (1) oder eine Halterung (8) aufweist, an dem bzw. der wenigstens ein weiteres Gerät, insbesondere ein Kastrationsgerät und/oder ein Impfbesteckhalter, montiert ist.

## Claims

1. Device for applying ear tags in animals' ears (40), the ear tags having a first part (18, 18a) which is provided with a pin (25) and a second part (19) which is provided with an eyelet (21), containing: an application zone (11), positioning means (31, 31a, 32) disposed at a spacing on both sides of the application zone (11) for disposing the first and second parts (18, 18a, 19) in application positions, two magazines (9, 10, 59) intended for receiving a number of first or second parts (18, 18a, 19) and configured as guide rails, by means of which magazines the first and second parts (18, 18a, 19) can be supplied successively to the positioning means (31, 31a, 32) under the effect of a force, a limit stop (37) which is assigned to the positioning means (32) for the second parts (19), and a punch (12) which can be pushed back and forth and by means of which one of the parts (18, 18a) which is situated in the application position can be ejected from said position and can be moved transversely through the application zone (11) in the direction of the other part (19) in such a manner that the pin (25) and the eyelet (21) come to engage together and connect the two parts (18, 18a, 19) together, **characterised in that** the magazines (9, 10, 59) are disposed and configured such that the first and second parts (18, 18a, 19) can be supplied to the positioning means (31, 31a, 32) as a result of the effect of gravity.

2. Device according to claim 1, **characterised in that** the positioning means (31, 31 a, 32) are configured as catching cups and the magazines (9, 10, 59) are configured and assigned to the catching cups such that only a first or second part (18, 18a, 19) respectively can occupy the application position.

3. Device according to claim 2, **characterised in that** the catching cups are configured as negative imprints of selected portions of the first or second parts (18, 18a, 19) for the exact positioning of the first and/or second parts (18, 18a, 19) in the application position.

4. Device according to one of the claims 1 to 3, **characterised in that** the magazine (9, 9a, 59; 10, 10a) for the first and/or second parts (18, 18a; 19) is configured as a C-profile and is provided with a guide slot (29) which receives the pins (25).

5. Device according to one of the claims 2 to 4, **characterised in that** the positioning means (31, 31 a, 32) and the first and/or second parts (18, 1 8a, 19) are positioned such that the latter are disposed in the application positions partly in the associated catching cup and partly in the associated magazine (9, 10, 59) and a region is formed which is open towards the application zone (11) and facilitates the ejection or extraction of the first and/or second parts (18, 18a, 19) from the application position.

6. Device according to one of the claims 1 to 5, **characterised in that** a steady (46) is assigned to the positioning means (31, 31 a) for the first parts (18, 1 8a), which steady is intended for improved positioning in the application position.

7. Device according to one of the claims 1 to 6, **characterised in that**, on its front end, the punch (12) has a mandrel (43) which can be inserted into blind holes (27) of the first parts (18, 18a) and the mandrel (43) has at least partially an external cross-section which is somewhat greater than corresponds to the internal cross-sections of the blind holes (27).

8. Device according to one of the claims 1 to 7, **characterised in that** the punch (12) has a linear configuration, is mounted to be pushable back and forth in a straight line mechanism and is actuatable by means of a pedal (3) against the force of a spring (16).

9. Device according to one of the claims 1 to 8 for applying first and second parts (18, 19) which are coherent and connected by means of thin webs, **characterised in that** a retaining pin (74) is assigned to at least one of the two magazines (59), which retaining pin prevents the descent, in a operating position, of the associated first or second parts (18, 19) at selected times during the connection process.

10. Device according to claim 9, **characterised in that** the retaining pin (74) can be brought into the operating position by means of swivelling the magazine (59).

11. Device according to one of the claims 1 to 10, **characterised in that** it has a stand (1) or a carrier (8), on which at least one further appliance, in particular a castration appliance and/or an inoculation instrument holder, is mounted.

## Revendications

1. Dispositif pour appliquer des marques d'oreille dans des oreilles d'animaux (40), les marques d'oreille présentant une première pièce (18, 18a) pourvue d'une cheville (25) et une seconde pièce (19) pourvus d'un oeillet (21), comprenant : une zone de mise en place (11), des moyens de positionnement (31, 31a, 32) disposés à distance de part et d'autre de la zone de mise en place, pour disposer les première et seconde pièces (18, 18a, 19) dans des positions de mise en place, deux magasins (9, 10, 59) réalisés en forme de rampes de guidage destinés à recevoir un certain nombre de premières et de secondes pièces (18, 18a, 19), au moyen desquels les premières et secondes pièces (18, 18a, 19) peuvent être amenées l'une après l'autre aux moyens de positionnement (31, 31a, 32) sous l'effet d'une force, une butée (37) associée au moyen de positionnement (32) pour les secondes pièces (19) et un poinçon (12) pouvant coulisser en va-et-vient, au moyen duquel l'une des pièces (18, 18a) se trouvant en position de mise en place peut être expulsée de celle-ci et être déplacée transversalement à travers la zone de mise en place (11) en direction de l'autre pièce (19) de manière telle que la cheville (25) et l'oeillet (21) viennent en prise l'un dans l'autre et relient l'une à l'autre les deux pièces (18, 18a, 19), **caractérisé en ce que** les magasins (9, 10, 59) sont disposés et réalisés de manière telle que les premières et secondes pièces (18, 18a, 19) peuvent être amenées aux moyens de positionnement (31, 31a, 32) sous l'effet de la force de gravité.

2. Dispositif selon la revendication 1, **caractérisé en ce que** les moyens de positionnement (31, 31a, 32) sont réalisés sous forme de coques réceptrices et les magasins (9, 10, 59) sont conformés et associés aux coques réceptrices de manière telle qu'à chaque fois seule une première ou une seconde pièce (18, 18a, 19) peut prendre la position de mise en place.

3. Dispositif selon la revendication 2, **caractérisé en ce que**, pour le positionnement exact des premières et/ou secondes pièces (18, 18a, 19) dans la position de mise en place, les coques réceptrices sont réalisées sous forme d'empreintes négatives de sections choisies des premières ou secondes pièces (18, 18a, 19).

4. Dispositif selon l'une des revendications 1 à 3, **caractérisé en ce que** le magasin (9, 9a, 59 ; 10, 10a) pour les premières et/ou secondes pièces (18, 18a, 19) est réalisé sous forme de profilé en C et est pourvu d'une fente de guidage (29) recevant des chevilles (25).

5. Dispositif selon l'une des revendications 2 à 4, **caractérisé en ce que** les moyens de positionnement (31, 31a, 32) et les premières et/ou secondes pièces (18, 18a, 19) sont positionnés de manière telle que ceux-ci dans les positions de mise en place sont disposés pour partie dans la coque réceptrice correspondante pour partie dans le magasin (9, 10, 59) correspondant et qu'est formée une zone ouverte en direction de la zone de mise en place (11), facilitant l'expulsion ou l'extraction des premières et/ou secondes pièces (18, 18a, 19) hors de la zone de mise en place.

6. Dispositif selon l'une des revendications 1 à 5, **caractérisé en ce qu'**au moyen de positionnement (31, 31a) pour les premières pièces (18, 18a) est associé un contre-support (46) destiné au positionnement amélioré dans la position de mise en place.

7. Dispositif selon l'une des revendications 1 à 6, **caractérisé en ce que** le poinçon (12) présente à son extrémité antérieure un mandrin (43) pouvant être inséré dans des trous borgnes (27) des premières pièces (18, 18a) et que le mandrin (43) possède du moins partiellement une section transversale légèrement plus grande que les sections transversales intérieures des trous borgnes (27).

8. Dispositif selon l'une des revendications 1 à 7, **caractérisé en ce que** le poinçon (12) est conformé en ligne droite, supporté de manière coulissante en va-et-vient dans un guide rectiligne et peut être actionné au moyen d'un levier à pied (3) contre la force d'un ressort (16).

9. Dispositif selon l'une des revendications 1 à 8 pour la mise en place de premières et secondes pièces connexes (18, 19) reliées par des pontets minces, **caractérisé en ce qu'**à au moins l'un des deux magasins (59) est associée une cheville de maintien (74), qui dans une position de travail empêche le glissement arrière de la première ou seconde pièce (18, 19) associées, à des moments sélectionnés, pendant l'opération d'assemblage.

10. Dispositif selon la revendication 9, **caractérise en ce que** la cheville de maintien (74) peut être amenée dans la position de travail par pivotement du magasin (59).

11. Dispositif selon l'une des revendications 1 à 10, **caractérisé en ce qu'**il présente un bâti (1) ou un support (8), sur lequel est monté au moins un autre appareil, en particulier un appareil de castration et/ou un support d'instruments de vaccination.
